# EUROPEAN PATENT APPLICATION

(11) **EP 3 309 057 A1**
(43) Date of publication of application: **18.04.2018**
(21) Application number: 16193242.1
(22) Date of filing: 11.10.2016
(51) Int. Cl.: B64C 3/56

(54) **AIRCRAFT WING WITH UPWARDLY FOLDABLE WINGTIP DEVICE**

(71) Applicant: Airbus Operations GmbH, 21129 Hamburg (DE)
(72) Inventor: MOELLER, Frank, 21129 Hamburg (DE); STAHL, Gerd, 21129 Hamburg (DE)
(74) Representative: Isarpatent

(57) **Abstract**

The present invention pertains to an aircraft wing comprising a fixed wing (1), a wingtip device being connected to a tip of the fixed wing (1) along a hinge band (4) at an upper side of the fixed wing (1), the wingtip device being configurable between a flight configuration for use during flight and a ground configuration for use during ground-based operation, in which ground configuration the wing tip device is folded upwardly by rotating about the hinge band (4) from the flight configuration such that the span of the aircraft wing is reduced, and a bolt-locking assembly (6) comprising locking bolts (7) and being configured to lock the wingtip device in the flight configuration via the locking bolts (7) at a lower side of the fixed wing (1) at the tip (3) of the fixed wing (1).

## Description

The present invention pertains to an aircraft wing with upwardly foldable wingtip device.

Although generally applicable to wings with wingtip devices for any kind of aircraft, the present invention and the problem on which it is based will be explained in greater detail with reference to passenger aircraft.

There is a trend towards increasingly large passenger aircraft, for which it is desirable to have correspondingly large wing spans. However, the maximum aircraft span is effectively limited by airport operating rules which govern various clearances required when maneuvering around the airport. In some suggested designs, aircraft are provided with wings which may be folded upwardly or downwardly to reduce the span of the aircraft on the ground (compared to when the aircraft is configured for flight). In particular, moveable wingtip devices have been suggested for use on passenger aircraft, where a wingtip device is movable between a flight configuration for use during flight and a ground configuration for use during ground-based operations. In the ground configuration, the wingtip device is moved away from the flight configuration such that the span of the aircraft wing is reduced. By way of example, WO 2015/150816 A1 discloses an arrangement in which the wingtip device is foldable downwards. Other arrangements, such as that disclosed in EP 3 059 159 A1, enable a wingtip device to move upwards.

It is desirable to provide a safe and reliable yet compact and lightweight arrangement for moving a wing tip device between the flight and ground configurations without impacting unduly on the design of the wing. Flight loads on the wing tip device should be adequately transferred into the main wing. At the same time, arrangements may be beneficial that do not require heavy actuators and/or locking mechanisms to deploy the wing and to securely hold it in the flight configuration.

Against this background, it is an object of the present invention to find solutions for aircraft wings with foldable wing tips with reduced weight, complexity and costs.

This object is achieved by an aircraft wing having the features of claim 1 and an aircraft having the features of claim 10.

According to a first aspect of the invention, an aircraft wing comprises a fixed wing. The aircraft wing further comprises a wingtip device being connected to a tip of the fixed wing along a hinge band at an upper side of the fixed wing. The wing-tip device is configurable between a flight configuration for use during flight and a ground configuration for use during ground-based operation, in which ground configuration the wing tip device is folded upwardly by rotating about the hinge band from the flight configuration such that the span of the aircraft wing is reduced. The aircraft wing further comprises a bolt-locking assembly comprising locking bolts. The bolt-locking assembly is configured to lock the wingtip device in the flight configuration via the locking bolts at a lower side of the fixed wing at the tip of the fixed wing.

According to a second aspect of the invention, an aircraft comprises an aircraft wing according to the first aspect of the invention.

Thus, one idea of the present invention is to combine a simple hinge connection on the upper side of the aircraft wing between the fixed wing and the wingtip device with a robust and lightweight bolt-locking mechanism at the lower side of the aircraft wing which is configured to lock the wingtip device with the fixed wing in the flight configuration. The locking bolts of the bolt-locking assembly may be driven by one joined locking actuator. Thus, complexity and weight can be significantly reduced compared to known solutions for foldable wingtip devices as less actuators are required. The upward folding wingtip device of the present invention offers considerably less opportunity for ramp damage incidents during ground handling of the aircraft, e.g. due to impacts of ground-based vehicles. Due to the particular arrangement of the present invention, the wingtip device may be moved into the flight configuration by its own weight. During flight, the bolt-locking mechanism prohibits the wingtip from moving towards the folded position as a result of aerodynamic lift forces acting on the wing.

Advantageous embodiments and improvements of the present invention are found in the subordinate claims.

According to an embodiment of the invention, the bolt-locking assembly may further comprise a transmission disk rotatably mounted to the fixed wing. The bolt-locking assembly may further comprise connecting rods coupling the transmission disk to the locking bolts. Each connecting rod may be pivotably mounted with one end to a locking bolt and with the other end to the transmission disk radially displaced from an axis of rotation of the transmission disk such that a rotation of the transmission disk through a locking angle moves the locking bolts between a locked configuration and an unlocked configuration. In this particularly simple configuration of the bolt-locking assembly, a rotation of the transmission disk is transformed into a translational movement of the connecting rods and thus of the locking bolts. The translational movement of each connecting rod is determined by the tangential component of the rotation of the transmission disk in the mounting point of the respective connecting rod and thus depends on the specific radial displacement of the mounting point of the connecting rod.

According to an embodiment of the invention, the bolt-locking assembly may further comprise a locking actuator configured to rotate the transmission disk through the locking angle to move the locking bolts between the locked configuration and the unlocked configuration. In one exemplary embodiment, the locking actuator may be coupled to the transmission disk via one or several connecting rods in a similar vein as the locking bolts are coupled to the transmission disk. The locking actuator may, for example, be configured as a mechanical, electric, hydraulic, pneumatic and/or similar actuator. However, the person of skill will readily acknowledge that equivalent means known to the person of ordinary skill may be provided for driving the transmission disk.

According to an embodiment of the invention, the bolt-locking assembly may further comprise an interlocking device configured to prohibit rotations of the transmission disk when being activated. This provision provides a simple protection against any unwanted rotation of the transmission disk and thus any accidental unlocking of the bolt-locking mechanism. The interlocking device may, for example, also be configured as a bolt mechanism, wherein one or several bolts are moved between two positions, one where rotation of the transmission disk is prohibited and one where rotation is enabled.

According to an embodiment of the invention, two connecting rods may be mounted opposite to each other on the transmission disk with respect to the axis of rotation of the transmission disk. In this particular embodiment, a symmetrical arrangement is provided in which two locking bolts are driven by one single transmission disk, i.e. two locking bolts may be activated by one single actuator.

According to an embodiment of the invention, the connecting rods may be aligned substantially parallel in the locked configuration.

According to an embodiment of the invention, the locking angle may have values larger than 90°. The locking angle may particularly be equal to 95°, for example. Hence, the transmission disk may be configured to turn more than a ¼ turn in order to achieve an 'over-centering' of the coupled system of the transmission disk and the connecting rods. This provision provides an additional protection against rotation.

According to an embodiment of the invention, the bolt-locking assembly may further comprise an end stop such that the connecting rods are moved to an over-centered position in the locked configuration. This means that the connecting rods are not aligned along a single axis (going through the axis of rotation of the transmission disk) in the locked configuration, but both are displaced from this 'center position' by an angle. For example, the end stop may prohibit any rotation for locking angles of more than 95° such that an over-centered position of 5° may be achieved for the connecting rods in the locked configuration, which serves as a protection against any accidental or unwanted rotation of the transmission disk (e.g. due to mechanical influences like vibrations or impacts) and thus any possible unlocking of the bolt-locking mechanism. In this case, the transmission disk is blocked to move further than the end stop. Moreover, the over-centering of the connecting rods provides an obstacle in the other direction of rotation that has to be overcome before the system can leave the locked configuration. In conjunction with an interlocking device, this provides a redundant anti-rotation protection and helps to secure the wingtip device in the flight configuration.

According to an embodiment of the invention, the bolt-locking assembly may comprise at least two transmission discs. These two or more transmission discs may further be coupled together to a locking actuator, e.g. through a rod or cable connection system. Each transmission may in turn be couple to two locking bolts via respective connecting rods. Hence, one single actuator, e.g. an electromechanical actuator, may move four, six or more locking bolts at the same time. To achieve the same effect in conventional systems, several actuators would be necessary which would lead to a significantly higher weight of the system.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Figs. 1a, b schematically show front views of an aircraft comprising aircraft wings with upwardly foldable wingtip devices according to an embodiment of the invention, the wing-tip devices being shown in flight configuration in Fig. 1a and in ground configuration in Fig. 1b.
Fig. 2 schematically depicts a perspective view of a bolt-locking assembly as employed in the aircraft wings of Figs. 1a, 1b.
Fig. 3 is a simplified top view of the bolt-locking assembly of Fig. 2.
Figs. 4a, b schematically show a bolt-locking assembly in locked configuration (Fig. 4a) and unlocked configuration (Fig. 4b) according to another embodiment of the invention.
Fig. 5 is a top view of a bolt-locking assembly according to yet another embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

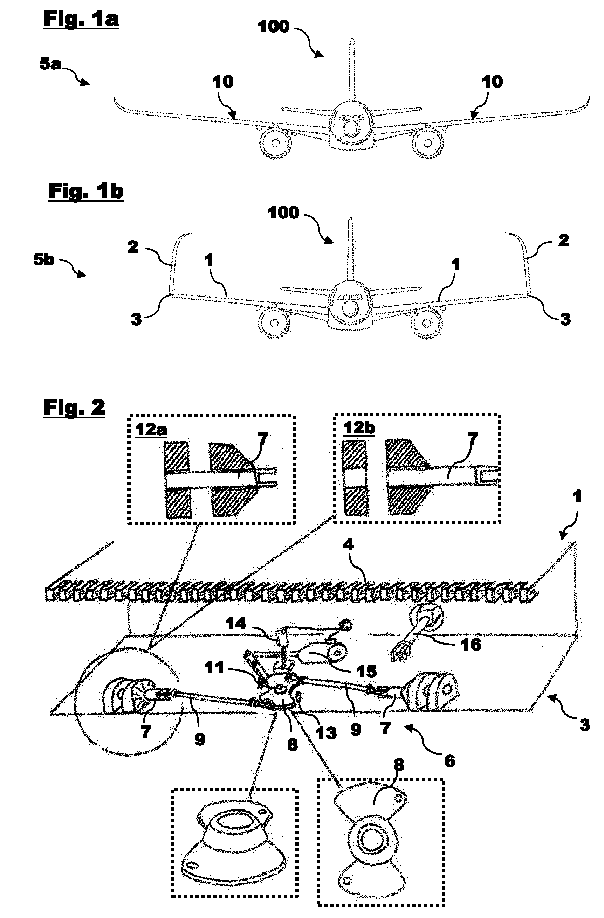

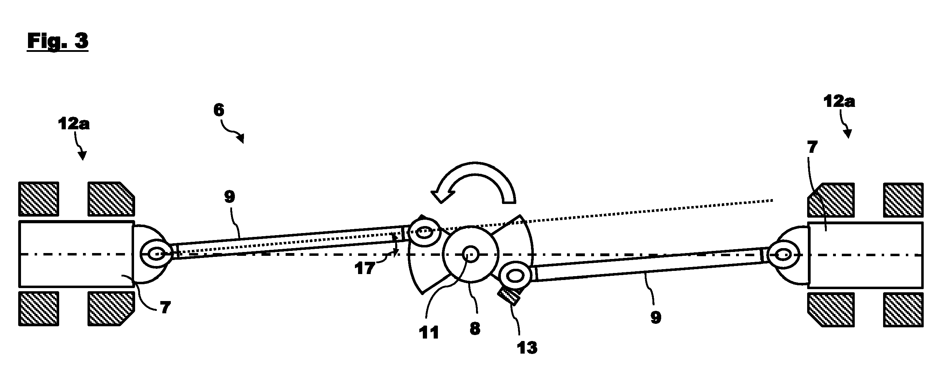

Figures 1a and 1b schematically show front views of an aircraft 100 comprising aircraft wings 10 with upwardly foldable wingtip devices 2 according to an embodiment of the invention. The wing-tip devices 1 are shown in flight configuration 5a in Fig. 1a and in ground configuration 5b in Fig. 1. Fig. 2 schematically depicts a perspective view of a bolt-locking assembly 6 as employed in the aircraft wings 10 of Figs. 1a, 1b, while Fig. 3 shows a simplified top view of the bolt-locking assembly of Fig. 2.

In the exemplary embodiment shown in Figs. 1a, b, the aircraft 100 is a commercial passenger aircraft. The aircraft wings 10 each comprise a fixed wing 1 and wingtip device 2 which is connected to a tip 3 of the fixed wing 1. The wingtip device 2 may be, for example, a wingtip extension, e.g. a planar tip extension. In other embodiments, the wingtip device 2 may comprise, or consist of, a non-planar device, such as a winglet, sharklet or similar. The wingtip device 2 may be a downwardly extending winglet (in the flight configuration). A hinge band 4 is arranged at the tip 3 (not shown in Figs. 1a, b, cf. Fig. 2) at an upper side of the fixed wing 1 to connect the fixed wing 1 with the wingtip device 2. The hinge band 4 defines a hinge line alongside the tip 3 of the fixed wing 1 arranged to allow the wingtip device 2 to rotate about the hinge line, i.e. the hinge band 4, between the flight configuration 5a and the ground configuration 5b. The wingtip device 1 is thus configurable between the flight configuration 5a for use during flight and the ground configuration 5b for use during ground-based operation. In the ground configuration 5b, the wing tip device 2 is folded upwardly from the flight configuration 5a. This enables the aircraft 100 to have a relatively large span during flight (which flight span may exceed airport gate limits), whilst still complying with airport gate limits, safe taxiway usage etc., when on the ground.

Referring now to Figs. 2 and 3, the bolt-locking assembly 6 is shown that provides the functionality of locking the wingtip device 2 in the flight configuration 5a. Fig. 2 shows the tip 3 of the fixed wing 1 in perspective view from a point remote of the aircraft 100. For the sake of clarity, the wingtip device 2, which is connected to the fixed wing 1 at the hinge band 4, is not shown in Fig. 2. The bolt-locking assembly 6 comprises two locking bolts 7. The locking bolts 7 lock the wingtip device 2 in the flight configuration 5a at a lower side of the fixed wing 1 at the tip 3 of the fixed wing (locked configuration 12a in the dotted box at the upper left in Fig. 2). For this purpose, the wingtip device 2 may be provided with a respective latching mechanism (not shown) configured to form a lock in conjunction with the locking bolts 7 of the bolt-locking assembly 6.

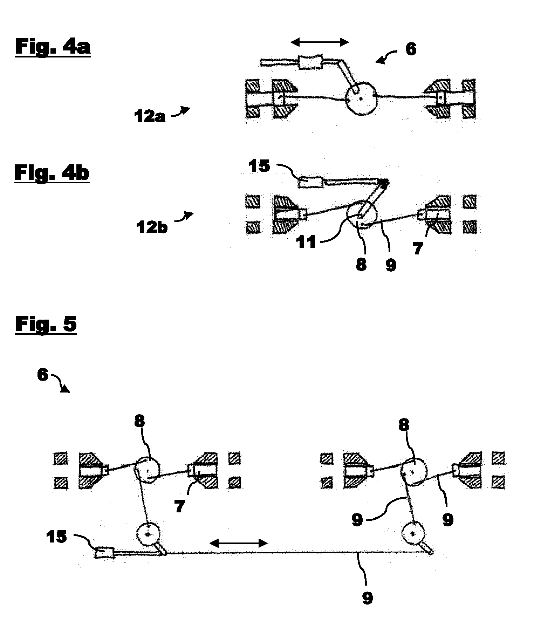

To switch into the ground configuration 5b, the locking bolts 7 are released such that the wingtip device 2 may be moved from the flight configuration 5a to the ground configuration 5b by rotating around the hinge band 4. For example, the pilot may release the locking bolts 7 via a dedicated switch or the like, which then triggers the bolt-locking assembly 6 to unlock the locking bolts 7 (unlocked configuration 12b in the dotted box in the upper right of Fig. 2) to release the wingtip device 2 from the flight configuration 5a. The person of skill will readily acknowledge that it should be ensured that the wingtip device 2 may only be released from the flight configuration 5a when the aircraft is on the ground. The bolt-locking assembly 6 further comprises a transmission disk 8 rotatably mounted to the fixed wing 1 and connecting rods 9 coupling the transmission disk 8 to the locking bolts 7. Each connecting rod 9 is pivotably mounted with one end to a locking bolt 7 and with the other end to the transmission disk 8. The mounting point of the connecting rod 9 on the transmission disk 8 is radially displaced from an axis of rotation 11 of the transmission disk 8. Due to this, a rotation of the transmission disk 8 through a locking angle moves the locking bolts 7 between a locked configuration 12a and an unlocked configuration 12b (cf. Figs. 4a, b). The bolt-locking assembly 6 further comprises a locking actuator 15 configured to rotate the transmission disk 8 through the locking angle to move the locking bolts 7 between the locked configuration 12a and the unlocked configuration 12b. In this specific embodiment, the locking actuator 15 is coupled to the transmission disk 8 via connecting rods in a similar vein as the locking bolts 7 are coupled to the transmission disk 8. Together the components of the bolt-locking assembly 6 form a very simple and robust yet efficient mechanism to lock and unlock the wingtip device 2 from the fixed wing 1 in order to switch from a flight configuration 5a to a ground configuration 5b and vice versa.

When the pilot releases the locking mechanism to unlock the flight configuration 5a, a wingtip folding engine 16 may be automatically activated (e.g. an electromechanical motor or the like), which then pushes the wingtip device 2 upwards about the hinge band 4. In a similar vein, the wingtip folding engine 16 may retract the wingtip device 2 from the ground configuration 5b to the flight configuration 5a. Before and after any switch between flight and ground configurations 5a, 5b, an interlocking device 14 may be triggered that prohibits rotations of the transmission disk 8. This provides a simple protection against any unwanted rotation of the transmission disk 8 and thus any accidental partial or full unlocking of the locking bolts 7. The interlocking device 14 may, for example, be configured as a bolt mechanism, wherein one or several bolts are moved between two positions, one where rotation of the transmission disk 8 is prohibited and one where rotation is enabled.

Still referring to Fig. 2, the transmission disk 8 of this embodiment is formed as a circular disk with two wings at opposite sides, each wing providing one mounting point for a connecting rod 9 (cf. the two lower dotted boxes in Fig. 2, which depict the transmission disk 8 in perspective view, on the left, and top view, on the right). Hence, two connecting rods 9 are mounted opposite to each other on the transmission disk 8 with respect to the axis of rotation 11 in the center of the transmission disk 8. In the locked configuration 12a, the connecting rods 9 are aligned substantially parallel to each other. The transmission disk 8 may be rotated from the locked configuration 12a into the unlocked configuration 12b through a locking angle of more than 90°, in particular 95°. However, other values above 90° are also possible, e.g. 100°. An end stop 13 prevents the transmission disk 8 from rotating more than this locking angle. The transmission disk 8 is thus configured to turn more than a ¼ turn (90° angle) in order to achieve an 'over-centered' position 17 of the coupled system of the transmission disk 8 and the connecting rods 9. Such an over-centering, e.g. 5°, may serve as a protection against any accidental or unwanted rotation of the transmission disk 8 due to mechanical influences or the like and thus any possible unlocking of the bolt-locking assembly 6. In conjunction with the interlocking device 14, this provides a redundant anti-rotation protection and helps to secure the wingtip device 2 in the flight configuration 5a.

Figs. 4a, b schematically show a bolt-locking assembly 6 in locked configuration (Fig. 4a) and unlocked configuration (Fig. 4b) according to another embodiment of the invention. In contrast to the embodiment depicted in Fig. 2, the transmission disk 8 is configured as a circular disk, the axis of rotation 11 being the center of the disk.

Fig. 5 is a top view of a bolt-locking assembly 6 according to yet another embodiment of the invention. Here, the bolt-locking assembly 6 comprises two transmission discs 8, which are coupled via connecting bolts 9 and further transmission disks to a locking actuator 15. In this vein, the system according to the invention may be extended to larger wing systems by consecutively adding more locking bolts 7 (four locking bolts 7 in the example of Fig. 5). In principle, the bolt-locking assembly 6 of the invention may similarly be oriented in a vertical direction, e.g. for narrow aircraft wings or the like.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: fixed wing
- 2: wingtip device
- 3: tip
- 4: hinge band
- 5a: flight configuration
- 5b: ground configuration
- 6: bolt-locking assembly
- 7: locking bolt
- 8: transmission disk
- 9: connecting rod
- 10: aircraft wing
- 11: axis of rotation
- 12a: locked configuration
- 12b: unlocked configuration
- 13: end stop
- 14: interlocking device
- 15: locking actuator
- 16: wingtip folding motor
- 17: over-centered position
- 100: aircraft

## Claims

1. Aircraft wing (10) comprising:
a fixed wing (1);
a wingtip device (2) being connected to a tip (3) of the fixed wing (1) along a hinge band (4) at an upper side of the fixed wing (1), the wingtip device (2) being configurable between a flight configuration (5a) for use during flight and a ground configuration (5b) for use during ground-based operation, in which ground configuration (5b) the wing tip device (2) is folded upwardly by rotating about the hinge band (4) from the flight configuration (5a) such that the span of the aircraft wing (10) is reduced; and
a bolt-locking assembly (6) comprising locking bolts (7) and being configured to lock the wingtip device (2) in the flight configuration (5a) via the locking bolts (7) at a lower side of the fixed wing (1) at the tip (3) of the fixed wing (1).

2. Aircraft wing (10) according to claim 1, wherein the bolt-locking assembly (6) further comprises a transmission disk (8) rotatably mounted to the fixed wing (1) and connecting rods (9) coupling the transmission disk (8) to the locking bolts (7), each connecting rod (9) being pivotably mounted with one end to a locking bolt (7) and with the other end to the transmission disk (8) radially displaced from an axis of rotation (11) of the transmission disk (8) such that a rotation of the transmission disk (8) through a locking angle moves the locking bolts (7) between a locked configuration (12a) and an unlocked configuration (12b).

3. Aircraft wing (10) according to claim 2, wherein the bolt-locking assembly (6) further comprises a locking actuator (15) configured to rotate the transmission disk (8) through the locking angle to move the locking bolts (7) between the locked configuration (12a) and the unlocked configuration (12b).

4. Aircraft wing (10) according to one of the claims 2 and 3, wherein the bolt-locking assembly (6) further comprises an interlocking device (14) configured to prohibit rotations of the transmission disk (8) when being activated.

5. Aircraft wing (10) according to one of the claims 2 to 4, wherein two connecting rods (9) are mounted opposite to each other on the transmission disk (8) with respect to the axis of rotation (11) of the transmission disk (8).

6. Aircraft wing (10) according to one of the claims 2 to 5, wherein the connecting rods (9) are aligned substantially parallel in the locked configuration (12a).

7. Aircraft wing (10) according to one of the claims 2 to 6, wherein the locking angle has values larger than 90°.

8. Aircraft wing (10) according to one of the claims 2 to 7, wherein the bolt-locking assembly (6) further comprises an end stop (13) such that the connecting rods (9) are moved to an over-centered position (17) in the locked configuration.

9. Aircraft wing (10) according to one of the claims 2 to 8, wherein the bolt-locking assembly (6) comprises at least two transmission discs (8).

10. Aircraft (100) comprising an aircraft wing (10) according to one of the claims 1 to 9.
